# EUROPEAN PATENT APPLICATION

(11) **EP 2 108 507 A1**
(43) Date of publication of application: **14.10.2009**
(21) Application number: 09388008.6
(22) Date of filing: 06.04.2009
(51) Int. Cl.: B32B 7/06, B32B 7/12, B32B 27/08, B32B 27/32, B32B 27/36, B65D 77/20, B65D 65/40

(54) **A method of making and using a sheet laminate**

(30) Priority: 07.04.2008 DK 200800504; 25.02.2009 DK 200900255
(71) Applicant: Danapak Flexibles A/S, 4200 Slagelse (DK)
(72) Inventor: Christensen, Lars Christian, 4200 Slagelse (DK); Johansen, Peter, 4200 Slagelse (DK); Schmidt, Palle, 4200 Slagelse (DK); Dydensborg, Else, 5260 Odense S (DK)
(74) Representative: Poulsen, Carsten Stechnik

(57) **Abstract**

When, according to the invention, producing a closure sheet of a laminate (11) in a first process comprising application of an adhesive layer (3) and a protective layer (4) on a base sheet (2) and, in a subsequent process (8), applying a welding layer (6), it is possible to attach this sheet material (11) to a package edge (9), which, when lifted, will be separated to expose the adhesive layer (3).

This ensures that the adhesive layer may serve as an adhesive such a large number of times as will allow the package to serve as a package having a reclosable lid.

The manufacture takes place in a continuous process, which ensures a rational production and a completely homogenous laminate (11).

## Description

The invention relates to a method of making a sheet laminate in the form of a laminate, which may be welded as a reclosable lid on a plastics tray or a similar plastics container, as well as use thereof.

When packaging food products in particular, such as cheese, it is generally known to use trays of PET with an associated lid.

This is a relatively expensive packaging form, and it is contingent upon the lid being made with suitable precision, so that a snap-like clamping closure is achieved between lid and tray.

However, a completely tight closure is rarely involved, since the parts are not very dimensionally stable. To this should be added that the requirements of transparency through the package are difficult to satisfy because of the irregular surface on the lid in particular.

### The object of the invention

It is the object of the invention to provide a method of making a sheet material in the form of a laminate, which may be welded as a reclosable lid on a plastics tray or a similar plastics container, as well as use thereof, and this is achieved according to the invention in that the sheet material is made by laminating a layer of PSA and a protective layer on a base sheet to form a first sheet material, on which material an optional primer and thereon a welding layer are subsequently applied by a further extrusion to form the finished sheet material.

By means of this method, it is possible to make a sheet material which has the property that in the assembly and thereby the bonding to the upper rim of the tray it may be separated by lifting and thereby exposure of the adhesive layer, the PSA layer, which remains on the lifted sheet, leaving the polymer layer on the rim of the tray.

This ensures the desired adhesiveness, which allows the sheet cover to be reclosed on the polymer layer and thus to close the package effectively. Since the adhesiveness is not weakened unduly, this closure system will be able to operate completely satisfactorily during the entire period of use of the package.

It is moreover possible to reduce the costs of the manufacture of the sheet laminate, as the method allows the protective layer and the reclosure layer to be laminated in one operation, thereby ensuring that the passage is "controlled" by the base sheet in the lamination and thereby ensures a uniform laminate.

It is moreover ensured that the reclosure layer is protected by a cover, and thereby that the sheet may be unwound without any risk of sticking together.

When, as stated in claim 2, the lamination is carried out by a co-extrusion, an effective manufacture of the laminate is ensured.

When, as stated in claim 3, the laminate is made in a gravure printing device, it is ensured that known and thoroughly tested materials may be applied.

When, as stated in claim 4, the first laminate is used as a reclosable lid or cover, where the protective layer of the laminate may be welded directly to the edge of the package, an inexpensive solution is achieved.

When, as stated in claim 5, a flat nozzle extruder is used for the manufacture of the first laminate, it is ensured that manufacture may take place in one and the same operation.

Finally, as stated in claim 6, it is expedient to use this sheet laminate as a reclosable lid or cover.

Since the sheet material may be manufactured to be completely transparent, the contents of the package may be inspected unobstructedly, which is an increasing wish among consumers.

### The drawing

An example of an embodiment of the invention will be described more fully below with reference to the drawing, in which
- fig. 1: schematically shows two extruders during the manufacture of the two laminates,
- fig. 2: schematically shows the manufacture by means of a gravure printing device and an extruder, and
- fig. 3: shows a sectional view of the lifted sheet cover on a package tray in an opened state.

### Description of a working example

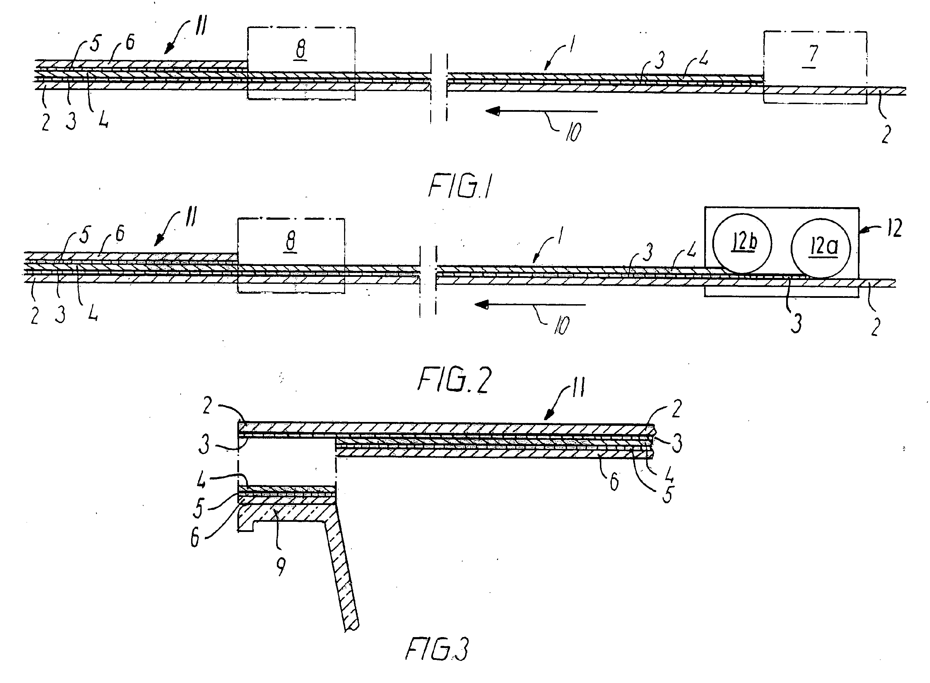

The sheet material 11, which consists of a laminate, may serve as a cover or lid over a package tray or a similar container, as is illustrated in the sectional view in fig. 3.

The purpose of this laminate 11 is that, in use, it may be separated in the layers, so that an adhesive face 3 is exposed by lifting, and so that it may adhere again in the reclosure against a polymer layer 4, which belongs to the part of the laminate which remains fixed to the bending rim 9.

The manufacture of the sheet material itself, which Is formed by a laminate, as well as the individual layers of this laminate will be described more fully below.

The laminate is manufactured in two steps comprising a first step, which is shown to the right, and a second step, which is shown to the left in fig. 1.

The first step takes place by co-extrusion, in which an adhesive 3 of PSA, preferably in an amount of between 6 and 12 g per m², is applied to a base sheet 2 of PET or the like by movement in the direction of the arrow 10 through an extruder 7, and simultaneously a protective layer 4 is applied, said layer being preferably a polymer, such as PE, PP and PET, so that the first laminate 1 is formed.

This co-extrusion preferably takes place in a flat nozzle extruder 7.

A second method of making the first laminate 1 is shown in principle in fig. 2.

Here, the laminate 1 is formed by gravure in a gravure printing device 12, which is shown schematically to comprise two rollers 12a and 12b, where the base sheet 2 has applied thereto the cover layer 3 in the first device 12a and the protective layer 4 in the next device 12b.

In those cases where the protective layer 4 may be welded to the plastics rim, it will be possible to use the first laminate 1 as a lid, since the reclosure layer 3 will be able to serve as an adhesive layer.

At the same time, the protective layer 4 protects the laminate 1, which may thereby be wound up without any risk of sticking together.

The reclosure layer 3, which is formed by a layer of hot-melt PSA, is an adhesive which, by pressure, forms a bond to a protective layer extending on the package tray.

In those cases where a "full" laminate 11 is needed, the manufacturing method is continued in that the laminate 1 manufactured first is passed to an additional extruder 8, in which a primer layer 5 is applied, where this is necessary, and thereon a welding layer 6.

This completes the manufacture of the finished laminate 11. As it may take place in a continuous process, it is inexpensive to produce, and it is certain that the laminate is completely uniform and thereby homogeneous in its full extent.

The primer 5 is preferably water-based, and the welding layer 6 is preferably a polymer layer in an amount of between 5 and 20 grams per m².

The laminate 1, 11 may be applied in a generally known manner to a printed sheet layer (not shown), where this might be needed, viz. with a view to text and illustrations.

The use of this laminate 11 as a lid or cover will then be explained.

As shown in fig. 3, it is a matter of a package tray with a rim portion 9, e.g. of PET, which has adhered, welded thereto a sheet member 11, which may be provided with an ear (not shown) as a finger grip, e.g. at one corner.

Lifting of the sheet from the tray provides access to the interior of the package and thereby the product which is present in it.

In such a lifting, the sheet layers will be separated in such a manner that the sheet is detached in two parts, as shown in fig. 3.

The polymer layer 6, the primer layer 5 and the polymer layer 4, which constitute the surface on the upper side of the container edge 9, remain on the container edge 9.

The lifted sheet layer will thereby be reduced to exposing the adhesive layer 3 as an adhesive face on the lower side of the lifted sheet member 2, 3.

The reclosable lid is generated hereby, as the sheet layer 2, 3 may then be laid down against the container edge again and adhere, so that the original laminate 11 is generated again.

The adhesiveness is so great as to ensure an air-tight package with permanent sure adhesive properties.

Since the sheet material may be manufactured to be completely transparent, the contents of the package may be inspected unobstructedly through the sheet.

In the example shown, a tray is used as an example of a package form, but, of course, it is within the scope of the invention to use the sheet together with a soft package, where the adhesive properties are provided between two flexible parts.

## Claims

1. A method of making a sheet material in the form of a laminate, which may be welded as a reclosable lid on a plastics tray or a similar plastics container, **characterized in**
**that** the sheet material is made by laminating a layer of PSA (3) and a protective layer (4) on a base sheet (2) to form a first sheet material (1),
on which material (1) an optional primer (5) and thereon a welding layer (6) are subsequently applied by a further extrusion (8) to form the finished sheet material (11).

2. A method according to claim 1, **characterized in that** the lamination of the first sheet material (1) takes place by co-extrusion (7).

3. A method according to claim 1, **characterized in that** the lamination of the first sheet material (1) takes place by a gravure printing device (12).

4. A method according to claims 1 - 3, **characterized in that** the first sheet material (1) is either stored or fed directly to the further extrusion (8).

5. A method according to claim 2, **characterized in that** the first extrusion takes place in a flat nozzle extruder (7).

6. Use of the sheet material manufactured by the method according to claims 1 - 5 as a reclosable lid or cover on a package tray, **characterized in that** a piece of sheet material (11) with the polymer layer (6) is adhered to the upper edge (9) of the package, following which lifting of this sheet material causes the PSA layer (3) to be separated from the protective layer (4), so that the adhesive (3) remains on the lower side of the lifted sheet material for adhesion against the protective layer (4) on the upper edge (9) of the package by reclosure.
